(19) Europäisches Patentamt / European Patent Office / Office européen des brevets

(11) **EP 3 535 446 B1**

(12) **EUROPEAN PATENT SPECIFICATION**

(45) Date of publication and mention
of the grant of the patent:
**25.11.2020 Bulletin 2020/48**

(51) Int Cl.:
*D04H 1/4234* *(2012.01)*   *C08J 3/12* *(2006.01)*
*D04H 1/64* *(2012.01)*   *D04H 1/728* *(2012.01)*
*D01D 5/00* *(2006.01)*

(21) Application number: **17800720.9**

(22) Date of filing: **27.10.2017**

(86) International application number:
**PCT/EP2017/077679**

(87) International publication number:
**WO 2018/083045 (11.05.2018 Gazette 2018/19)**

(54) **ELECTRICALLY CONDUCTIVE NON-WOVEN FABRIC**

ELEKTRISCH LEITFÄHIGES VLIES

TEXTILE CONDUCTEUR NON TISSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2016 EP 16196941**

(43) Date of publication of application:
**11.09.2019 Bulletin 2019/37**

(73) Proprietor: **Universität Bayreuth**
**95440 Bayreuth (DE)**

(72) Inventors:
• **GREINER, Andreas**
**95444 Bayreuth (DE)**
• **AGARWAL, Seema**
**35039 Marburg (DE)**
• **LANGNER, Markus**
**35099 Burgwald (DE)**
• **REICH, Steffen**
**07407 Rudolstadt (DE)**

(74) Representative: **Dr. Gassner & Partner mbB**
**Wetterkreuz 3**
**91058 Erlangen (DE)**

(56) References cited:
EP-A1- 3 056 532   WO-A1-2006/099736
KR-A- 20160 062 617   KR-B1- 100 843 191

**Description**

The present invention concerns an electrically conductive non-woven fabric, a method for producing the electrically conductive non-woven fabric and a use of the electrically conductive non-woven fabric.

From WO 2016/128195 a powder of fragments of at least one polymeric nanofiber which fragments have a maximal average length of 0.12 mm is known. Furthermore, a product comprising this powder, wherein the powder is coated on a surface of the product or incorporated in the product is known. The maximal length of the fragments may be 0.15 mm and the average diameter of the fragments may be in the range of 10 nm to 3000 nm. The nanofiber may be produced by an electrospinning process.

Weng W. et al., Angew. Chem. Int. Ed. 2016, 55, 6140 to 6169 describes the state-of-the-art of wearable electronics, i. e. smart electronic textiles.

US 7,994,080 B2 discloses an electrically conductive non-woven fabric for heating applications comprising a three-dimensional network of non-woven non-electrically conductive synthetic fibers and electrically conductive strands of synthetic fibers or fine metal wires consolidated therewith, with the conductive strands having a length between 1 to 6 inches, the non-electrically conductive synthetic fibers occupying a mass between 50% to 98% of said fabric such that said fabric has an intrinsic resistivity in the range of from about 0.05 to 5 $\Omega$m2/kg which resistivity is relatively high. The non-electrically conductive synthetic fibers may be polypropylene, polyamide or polyester. The conductive strands may occupy a mass of from about 5% to 50% of the fabric. The conductive strands may be constituted by fine metal wires of silver, gold, copper, aluminium, steel or stainless steel. The conductive fibers and the non-woven non-electrically conductive synthetic fibers may be consolidated together by needle-punching.

The purpose of the present invention is to provide an electrically conductive non-woven fabric having a relatively low resistivity resulting in a relatively good conductivity for electricity. It is a further purpose of the present invention to provide a method for producing such an electrically conductive non-woven fabric and a use of the electrically conductive non-woven fabric.

The problems are solved by the features of independent claims 1, 9, 10 and 15. Embodiments are subject-matter of dependent claims 2 to 8 and 11 to 14.

The subject-matter of the invention is an electrically conductive non-woven fabric which fabric comprises or consists of a three-dimensional network of non-woven non-electrically conductive synthetic nanofibers and electrically conductive metal nanowires distributed therein, wherein the synthetic nanofibers comprise or consist of fibers having a diameter in the range of 10 nm to 2000 nm and a maximal length of 6 mm, wherein the electrically conductive metal nanowires comprise or consist of strands having a diameter in the range of 10 nm to 800 nm and a length in the range of 1 $\mu$m to 500 $\mu$m, wherein the electrically conductive metal nanowires occupy between 0.5% by volume to 5% by volume of said fabric, wherein the electrically conductive metal nanowires and the synthetic nanofibers are homogenously distributed within the electrically conductive non-woven fabric. When the electrically conductive metal nanowires and the synthetic nanofibers are homogenously distributed within the electrically conductive non-woven fabric, each volume of 100 $\mu$m3 of the non-woven fabric may comprise the same content of synthetic nanofibers and each volume of 100 $\mu$m3 of the non-woven fabric may comprise the same content of electrically conductive metal nanowires. The volume of 100 $\mu$m3 and the content of synthetic nanofibers and electrically conductive metal nanowires therein can be examined by use of electron microscopy, in particular scanning electron microscopy.

An effect of the homogenous distribution, in particular in a small volume of only 100 $\mu$m3, is that the intrinsic resistivity is much lower than that mentioned in US 7,994,080 B2 and the electric conductivity is much higher. Though it is stated that it is possible to form a homogenous mass by needle-punching it is obvious that needle-punching will never result in such a homogeneity of the non-woven fabric as that that is achieved by use of the relatively short electrically conductive metal nanowires and the relatively short synthetic nanofibers each of which being homogenously distributed within the fabric according to the invention. In particular it is not possible to achieve by needle-punching that the non-woven fabric comprises the same content of synthetic nanofibers and of electrically conductive metal nanowires in each volume of 100 $\mu$m3 of the non-woven fabric. This content of synthetic nanofibers and electrically conductive metal nanowires may be a mass content or a volume content. The electrical conductivity of the electrically conductive non-woven fabric according to the invention may be at least 1000 S/m, in particular at least 5000 S/m, in particular at least 10000 S/m, in particular at least 50000 S/m, in particular at least 90000 S/m, in particular at least 100000 S/m, in particular at least 300000 S/m, in particular at least 500000 S/m, in particular at least 700000 S/m. In one embodiment a conductivity of 750000 S/m could be measured.

The non-woven fabric may have a layer thickness of 100 $\mu$m or less or above 100 $\mu$m. It may have an open porous sponge-like structure, in particular if the layer thickness is above 100 $\mu$m.

The synthetic nanofibers may comprise or consist of fibers having a diameter below 1500 nm, in particular below 1000 nm, in particular below 500 nm, in particular below 400 nm, in particular below 300 nm, in particular below 200 nm, in particular below 100 nm. The synthetic nanofibers may comprise or consist of fibers having a maximal length of 5 mm, in particular 4 mm, in particular 3 mm, in particular 2 mm, in particular 1 mm, in particular 0.8 mm, in particular 0.6 mm, in particular 0.4 mm, in particular 0.2 mm. In one embodiment the synthetic nanofibers comprise or consist of fibers having a diameter in the range 50 nm to 1350 nm, in particular in the range of 50 nm to 800 nm, and/or a length in the range of 0.5 mm to 0.15 mm.

The electrically conductive metal nanowires may comprise or consist of strands having a diameter in the range of 20 nm to 600 nm, in particular 25 nm to 500 nm, in particular 25 nm to 350 nm. The electrically conductive metal nanowires may comprise or consist of strands having a length in the range of 2 $\mu$m to 400 $\mu$m, in particular 3 $\mu$m to 300 $\mu$m, in particular 3 $\mu$m to 200 $\mu$m, in particular 3 $\mu$m to 100 $\mu$m, in particular 4 $\mu$m to 50 $\mu$m.

The synthetic nanofibers may comprise or consist of at least one of a polyimide, a polyamide, a polyester, polyacrylonitrile (PAN), a polyacrylonitrile comprising copolymer, polyethylene (PE), polyethylene terephthalate (PET), polypropylene (PP), polysulfone, poly(acrylonitrile/styrene/butadiene) copolymer (ABS), polycarbonate, polyamideimide, polyesterimide, polyurethane, polyguanidine, polybiguanidines, chitosan, silk, recombinant silk, collagene, cross-linked polyamide carboxylic acid, polyamide carboxylic acid, polyvinyl alcohol, polydiallyldimethylammonium chloride, polyvinylpyrrolidone, polystyrene (PS), polymethylmethacrylate (PMMA), a polcationic polymer, a polyanionic polymer, polycaprolactone, in particular poly(epsilon-caprolactone) (PCL), polylactic acid (PLA), poly-L-lactic acid (PLLA), and poly acrylic acid. Since the synthetic nanofibers may comprise at least one of the mentioned polymers, they can consist of a blend comprising at least one of the mentioned polymers, a blend of at least two of the mentioned polymers, a copolymer comprising at least one of the mentioned polymers or a copolymer of at least two of the mentioned polymers. The nanofibers may be produced by an electrospinning process. In a specific embodiment the synthetic nanofibers comprise or consist of polyacrylonitrile and/or polycaprolactone, in particular poly(epsilon-caprolactone).

The electrically conductive metal nanowires may comprise at least 80% by weight, in particular at least 90% by weight, in particular at least 95% by weight, in particular at least 96% by weight, of silver, copper, gold, nickel, iron, cobalt, rhodium, rhenium, iridium, osmium, bismuth, platinum and/or palladium. In an embodiment the electrically conductive metal nanowires comprise at least 80% by weight, in particular at least 90% by weight, in particular at least 95% by weight, in particular at least 96% by weight, of silver.

The electrically conductive metal nanowires may comprise or consist of strands having a ratio of length to diameter of at least 80, in particular at least 120, in particular a ratio of length to diameter in the range of 120 to 900, in particular a ratio of length to diameter in the range of 120 to 700, in particular a ratio of length to diameter in the range of 120 to 500. In an embodiment the electrically conductive metal nanowires occupy a volume in the range of 0.3% by volume to 5% by volume, in particular in the range of 0.36% by volume to 3.5% by volume, in particular in the range of 0.4% by volume to 3% by volume, in particular in the range of 0.5% by volume to 1.8% by volume, of said fabric.

The density of the electrically conductive non-woven fabric can be below 0.1 g/cm$^3$ or even below 0.05 g/cm$^3$, in particular if it has a sponge-like structure. Usually, said fabric has a density in the range of 0.15 g/cm$^3$ to 0.35 g/cm$^3$, in particular in the range of 0.2 g/cm$^3$ to 0.33 g/cm$^3$, in particular in the range of 0.23 g/cm$^3$ to 0.31 g/cm$^3$.

The surface weight of the electrically conductive non-woven fabric according to the invention can be in the range of 8 g/m$^2$ to 20 g/m$^2$, in particular in the range of 10 g/m$^2$ to 19 g/m$^2$, in particular in the range of 10.5 g/m$^2$ to 18 g/m$^2$.

The low density and the low surface weight enable the production of very light clothes and other products of said fabric.

The porosity of the electrically conductive non-woven fabric according to the invention can be in the range of 70% to 99.5%, in particular in the range of 80% to 99.5%, in particular in the range of 90% to 99.5%, in particular in the range of 95% to 99.5%. A porosity in the range of 95% to 99.5% can be achieved, in particular in a non-woven fabric having a sponge-like structure. Other non-woven fabrics according to the invention usually have a porosity in the range of 70% to 99%. Owing to the mentioned porosity the fabric is breathable and permeable to water vapor. This feature is important, e. g. when the fabric is used for the production of clothes.

Porosity is defined as the part of the total volume of the fabric that is not occupied by the volume of the synthetic nanofibers, the volume of the nanowires and the volume of possible further constituents. It can be determined on basis of the weight of the nanowires, the weight of the synthetic nanofibers and the weight of the possible further constituents under consideration of the density of the material forming the synthetic nanofibers, the density of the metal forming the nanowires and the density of the material forming the possible further constituents.

The pore size of the electrically conductive non-woven fabric according to the invention may be in the range of 0.5 $\mu$m to 4.0 $\mu$m, in particular in the range of 1.0 $\mu$m to 2.0 $\mu$m. Pore size measurements were performed with a PSM 165/H (pore size metre) from Topas GmbH with Topor from Topas GmbH (Oskar-Röder-Str. 12, D-01237 Dresden, Germany) as test liquid (surface tension of 16.0 mN/m). An adapter with an inner diameter of 11 mm was used as the sample holder, and a flow rate of up to 70 L/min was applied. The presented values are averages of at least three measurements.

The invention further concerns a method for producing the electrically conductive non-woven fabric according to the invention. The method comprises or consists of the following steps:

a) Providing the non-electrically conductive synthetic nanofibers,

b) providing the electrically conductive metal nanowires,

c) homogenously dispersing the non-electrically conductive synthetic nanofibers and the electrically conductive metal nanowires in a liquid,

d) separating the liquid from the dispersion resulting from step c).

The non-electrically conductive synthetic nanofibers may be provided in a dispersion, i. e. dispersed in a liquid that may be a solution or a mixture. In particular the liquid may be a mixture of at least two of ethanol, isopropanol and water, in particular a mixture of isopropanol and water, e. g. in a volume : volume ratio of 7 : 3.

The electrically conductive metal nanowires may be provided in a separate dispersion or dispersed in the dispersion of the non-electrically conductive synthetic nanofibers. If provided in a separate dispersion step c) is performed by mixing the dispersion of the synthetic nanofibers and the dispersion of the metal nanowires. If the metal nanowires are provided in a separate dispersion, the liquid in which the metal nanowires are dispersed may be different to that in which the non-electrically conductive synthetic nanofibers are dispersed or it may be the same, e. g. the above mentioned mixture of isopropanol and water. If the liquids are different they have to be miscible.

Alternatively the electrically conductive non-woven fabric according to the invention may be produced by a method comprising or consisting of the following steps:

a) Providing a dispersion of the non-electrically conductive synthetic nanofibers in a liquid,

b) separating the liquid from the dispersion thus resulting in a non-woven fabric of the synthetic nanofibers and optionally soaking the non-woven fabric with a hydrophilic liquid optionally followed by washing of the non-woven fabric,

c) providing a dispersion of the electrically conductive metal nanowires,

d) soaking the non-woven fabric of step b) with the dispersion of step c) optionally followed by washing of the non-woven fabric and

e) drying of the non-woven fabric.

The liquid may be a solution or a mixture, in particular the mixture of isopropanol and water mentioned above. The washing can be performed with water. The hydrophilic liquid may be polyethylene imine. The purpose of the soaking of the non-woven fabric with the hydrophilic liquid is to provide a hydrophilic surface on the synthetic nanofibers to improve deposition of hydrophilic metal nanowires.

In both methods the liquid may be removed by evaporation, soaking, suction, filtration and/or freeze drying. Suction may be performed by pouring the dispersion on a grid positioned on a glass frit. After suction of the liquid through this arrangement the electrically conductive non-woven fabric can be removed together with the grid and afterwards removed from the grid. The resulting non-woven fabric may be heated to a temperature allowing the synthetic nanofibers to stick together, in particular to a temperature of up to 350 °C, in particular to a temperature of up to 310 °C. The heating may be performed for at least 30 minutes, in particular for at least 45 minutes. It may be performed in a vacuum. This procedure stabilizes a sponge-like open porous structure of the non-woven fabric.

The non-electrically conductive synthetic nanofibers may be produced by electrospinning and subsequent cutting or breaking of the resultant fibers. For cutting or breaking of the fibers a blender having a cutting unit may be used. The blender can be operated until the fibers have the desired length. The cutting or breaking may occur at a low temperature, in particular at a temperature below 15 °C, in particular at a temperature in a range of -200 °C to 15 °C, in particular at a temperature of liquid nitrogen.

The invention further concerns the use of the electrically conductive non-woven fabric according to the invention for conducting electricity, for producing heat by conducting electricity through the non-woven fabric, for thermal insulation and/or for providing a pressure sensitive sensor, a filter, an electrode, in particular in a capacitor, a battery or a fuel cell, a catalyst, a heating device, a biodegradable heating device, an electromagnetic shielding, e. g. in a shielded cable or a shielded electronic device, a wrapping preventing electrostatic discharges, clothes preventing electrostatic discharges, or a membrane.

The thermal insulation may be an insulation simultaneously providing an insulation with respect to electromagnetic radiation. The use as an electrode may be the use as an electrode in a fuel cell, in particular a microbial fuel cell wherein the non-woven fabric is colonized or flowed through by microorganisms. Furthermore, the non-woven fabric according to the invention may be used in an electronic textile or a textile insulating with respect to electromagnetic radiation. A use as a pressure sensitive sensor is possible since electric conductivity increases if pressure on the non-woven fabric is increased. With respect to a use for producing heat a main advantage of the non-woven fabric is that it is extremely fast heated up when electricity flows through the fabric and cools down very quickly when flow of electricity through the fabric is stopped. Interestingly, electrical conductivity of the fabric is only influenced little by bending and rolling of the fabric.

Conducting electricity by the fabric according to the invention may be useful for providing very flexible electric contacts. It may also be useful when the non-woven fabric according to the invention is used for wrapping sensitive electronic components to prevent electrostatic discharges that may destroy the electronic component. The prevention of electrostatic discharges makes the non-woven fabric according to the invention also useful for the production of clothes and in particular the lining of clothes because common clothes made of fleece always tend to provoke electrostatic discharges when rubbed. A combination of the effect of thermal insulation, electromagnetic shielding and producing heat can be used in the construction of buildings, e. g. in the façade or only for specific rooms inside a building, e. g. by facing the walls, ceiling and/or floor of a room. A heating device can also be useful for heating plants in the ground. Such a heating device can be biodegradable. This can be achieved when the synthetic nanofibers of the fabric according to the invention are made of biodegradable polymers, such as polylactic acid, collagen or silk.

Embodiments of the invention:

Fig. 1 shows a scanning electron microscope (SEM) image of silver nanowires,

Fig. 2 shows the distribution of the length of the silver nanowires,

Fig. 3 shows the distribution of the diameters of the silver nanowires,

Fig. 4 shows schematically the preparation of an electrically conductive non-woven fabric comprising PAN nanofibers, PCL nanofibers and conductive silver nanowires,

Fig. 5 shows an SEM/Backscattered Electron (BSE) image of a non-woven fabric membrane comprising PAN and PCL nanofibers and silver nanowires,

Fig. 6 shows an SEM image of a sponge-like non-woven fabric comprising polyimide nanofibers and silver nanowires,

Fig. 7 shows a diagram of the electrical conductivity in dependency of the silver content of a PAN and PCL fibers containing non-woven membrane,

Fig. 8 shows a diagram of the thermal conductivity in dependency of the silver content of a PAN and PCL fibers containing non-woven membrane,

Fig. 9 shows a diagram of the temperature in dependency of time and silver content of a PAN and PCL fibers containing non-woven membrane after a short heating by conduction of electricity, and

Fig. 10 shows a diagram of the electrical conductivity in dependency of compression of a sponge-like non-woven fabric comprising polyimide nanofibers and silver nanowires.

1. Synthesis of electrically conductive silver nanowires (AgNW):

The AgNW were synthesized using the polyol process according to S. M. Bergin, Y.-H. Chen, A. R. Rathmell, P. Charbonneau, Z.-Y. Li, B. J. Wiley, Nanoscale 2012, 4, 1996-2004. In detail, 160 mL ethylene glycol (EG) were added to a 500 mL schlenk flask, stirred at 500 rpm and preheated in an oil bath at 130 °C for 1 hour. 0.2 mL of 0.1985 g NaCl in 10 mL EG, 0.1 mL of 0.054 g $FeCl_3$ in 10 mL EG, 20.76 mL of 1.05 g polyvinylpyrolidone K30 in 25 mL EG and 20.76 mL of 1.05 g $AgNO_3$ in 25 mL EG were given to the schlenk flask. The reaction took place at 130 °C for 6 h. Afterwards the reaction solution was cooled down to room temperature and acetone was added until silver nanowires flocculated. This purification process with acetone was repeated three times. During the last purification process the silver nanowires were centrifuged at 1000 rpm for 10 minutes. The obtained silver nanowires were dispersed in water to receive a silver nanowire dispersion having a silver concentration of 183 mg/mL.

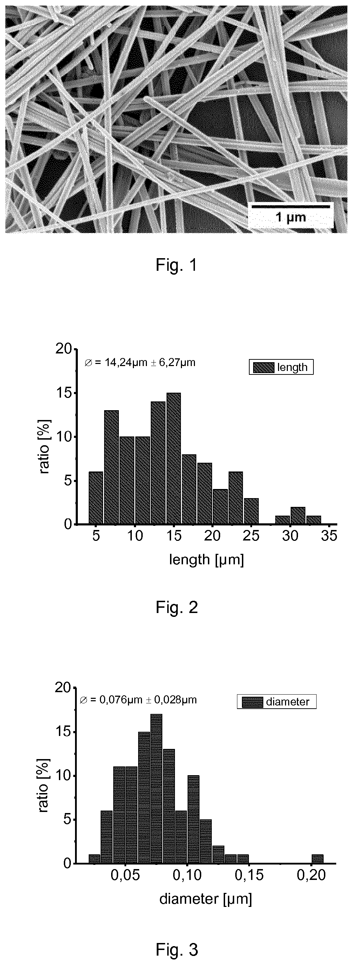

Fig. 1 shows a SEM image of the silver nanowires obtained by the above method. Fig. 2 shows a length distribution of these nanowires. It shows that the arithmetic average of length is 14.24 $\mu$m $\pm$ 6.27 $\mu$m. Fig. 3 shows the diameter distribution of the silver nanowires. It shows that the arithmetic average of diameters is 76 nm $\pm$ 28 nm. Length and diameter can be influenced by the parameters and conditions of the reaction for generating the silver nanowires.

2. Preparation of polyacrylonitrile (PAN) nanofibers:

PAN nanofibers were obtained by electrospinning of a solution of 10% by weight PAN (Mw = 150000 g/mol) in dimethylformamide (DMF) using a needle having a diameter of 0.9 mm at a voltage of +25 kV and -1 kV, at 25 °C, at a relative humidity of 35% and at a temperature of 20 °C. The PAN nanofibers were collected on an aluminum foil at a distance of 15 cm to the needle.

3. Preparation of poly(epsilon-caprolactone) (PCL) nanofibers:

PCL nanofibers were obtained by electrospinning of a solution of 15% by weight PCL (Mw = 150000 g/mol) in a mixture of 70% by weight of tetrahydrofuran (THF) and 30% by weight of DMF using a needle having a diameter of 0.9 mm at a voltage of +14 kV and -1 kV, at 25 °C, at a relative humidity of 35% and at a temperature of 20 °C. The PCL nanofibers were collected on an aluminum foil in a distance of 15 cm to the needle.

4. Preparation of a dispersion of short PAN and PCL nanofibers:

Dispersions of short PAN and PCL nanofibers were obtained by cutting of 1 g of electrospun PAN or PCL nanofiber mats in a solution of 700 mL 2-propanol and 300 mL demineralized water at -18 °C in a blender with cutting unit (Robot Coupe Blixer 4, Rudolf Lange GmbH & Co.KG) for 2 minutes at 3500 rpm. The diameter of the electrospun PAN and PCL fibres, respectively ranged from 307 $\pm$ 82 nm and 714 $\pm$ 593 nm according to SEM images.

5. Preparation of a conductive non-woven fabric membrane comprising PAN and PCL nanofibers and silver nanowires:

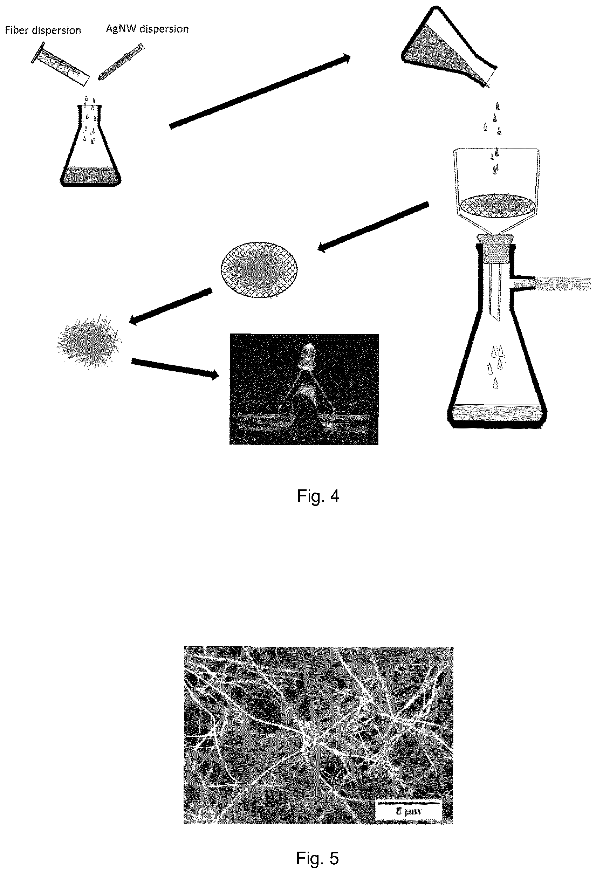

The preparation of the electrically conductive non-woven fabric comprising PAN nanofibers, PCL nanofibers and conductive silver nanowires is schematically shown in Fig. 4.

20 mL of the PAN nanofiber dispersion and 10 mL of the PCL nanofiber dispersion were mixed with the dispersion of the silver nanowires, wherein each of the dispersions was obtained as described above. The mixture was shaken and the contained liquid was sucked through a round 325 mesh stainless steel grid having a diameter of 60 mm. The grid was pressed on a glass frit to achieve a homogeneous flow through the stainless steel grid. The obtained fiber mat was dried at air at room temperature and detached from the steel grid after drying. Afterwards it was pressed between two glass plates at a temperature of 75 °C for 15 seconds to achieve a cross-linking of the synthetic nanofibers and therewith a high stability composite membrane. The picture in the center at the bottom of Fig. 4 shows two button cells connected via this membrane and via a light emitting diode. The shining of the diode demonstrates that the electric circuit is closed by the membrane. Furthermore, the inventors found that conductivity is obviously not or nearly not affected by bending of the electrically conductive non-woven fabric according to the invention. Since conductivity is nearly independent of the bending angle, operation of the light emitting diode by the bended non-woven fabric shown in Fig. 4 was possible. Fig. 5 shows an SEM/BSE image of such membrane containing 0.45% by volume of AgNW. The thin silver nanowires and the thicker synthetic nanofibers are clearly visible.

Results obtained with different fractions of AgNW in the non-wovens according to the invention are given in the following table 1:

Table 1:

| Experiment No. | PAN dispersion[1] (mL) | PCL dispersion[2] (mL) | AgNW dispersion[3] ($\mu$L) | Fraction of AgNW in non-woven[4] (vol%) | Density (g/cm$^3$) | Porosity (%) | Resistance ($\Omega$ m) | Electrical conductivity (S/m) |
|---|---|---|---|---|---|---|---|---|
| 1 | 20 | 10 | 0 | 0.00 | 0.245 | 79.5 | $333 \pm 143$ | $0.003 \pm 0.004$ |
| 2 | 20 | 10 | 32 | 0.16 | 0.248 | 86.4 | $566 \pm 532$ | $0.002 \pm 0.002$ |
| 3 | 20 | 10 | 64 | 0.27 | 0.253 | 88.7 | $148 \pm 110$ | $0.007 \pm 0.009$ |
| 4 | 20 | 10 | 96 | 0.36 | 0.258 | 90.0 | $3.28 \times 10^{-4} \pm 1.18 \times 10^{-3}$ | $3047 \pm 845$ |
| 5 | 20 | 10 | 128 | 0.45 | 0.259 | 91.0 | $7.96 \times 10^{-5} \pm 2.40 \times 10^{-4}$ | $12570 \pm 4170$ |
| 6 | 20 | 10 | 160 | 0.65 | 0.295 | 91.1 | $4.42 \times 10^{-5} \pm 2.62 \times 10^{-4}$ | $22640 \pm 3010$ |
| 7 | 20 | 10 | 192 | 0.63 | 0.263 | 92.6 | $2.73 \times 10^{-5}\ 3.32 \times 10^{-4}$ | $36670 \pm 3810$ |
| 8 | 20 | 10 | 224 | 0.78 | 0.297 | 92.1 | $1.97 \times 10^{-5} \pm 2.02 \times 10^{-4}$ | $50720 \pm 4950$ |
| 9 | 20 | 10 | 256 | 0.96 | 0.284 | 93.0 | $1.52 \times 10^{-5} \pm 9.71\ 10^{-5} \times$ | $66000 \pm 7200$ |
| 10 | 20 | 10 | 288 | 0.92 | 0.302 | 93.5 | $1.46 \times 10^{-5} \pm 1.39 \times 10^{-5}$ | $68530 \pm 10300$ |
| 11 | 20 | 10 | 320 | 1.07 | 0.307 | 93.3 | $1.07 \times 10^{-5} \pm 6.94 \times 10^{-5}$ | $93610 \pm 14400$ |
| 12 | 20 | 10 | 690 | 2.30 | 0.487 | 91.6 | $4.56 \times 10^{-6} \pm 4.18 \times 10^{-6}$ | $219519 \pm 19729$ |
| 13 | 20 | 10 | 690 | 2.25 | 0.414 | 93.6 | $2.46 \times 10^{-6} \pm 2.33 \times 10^{-6}$ | $406811 \pm 23167$ |
| 14 | 20 | 10 | 835 | 2.79 | 0.441 | 94.0 | $1.79 \times 10^{-6} \pm 1.67 \times 10^{-6}$ | $557929 \pm 41027$ |
| 15 | 20 | 10 | 1003 | 3.35 | 0.467 | 94.1 | $1.32 \times 10^{-6} \pm 9.37 \times 10^{-7}$ | $756375 \pm 310993$ |

[1] Concentration of PAN dispersion = 1.00 g/L
[2] Concentration of PCL dispersion = 1.00 g/L
[3] Concentration of AgNW dispersion = 183 g/L
[4] Determined gravimetrically by thermogravimetric analysis (TGA)

Table 1 shows that electrical conductivity increased from 0.27 vol% AgNW to 0.36 vol% AgNW by about seven orders of magnitude. Furthermore, the table shows that a metal-like electrical conductivity of about 750000 S/m could be achieved with the relative low content of 3.35 vol% AgNW. Furthermore, the table shows that porosity increased with increasing amount of AgNW.

The volume percentage of AgNW in the non-wovens was calculated using following equations (S1) and (S2):

$$vol\%(Ag) = \frac{V_{Ag}}{V_{conductive\ non-woven}} = \frac{\frac{m_{Ag}}{\rho_{Ag}}}{\pi r^2 h} \tag{S1}$$

$$m_{Ag} = (wt\%_{sample} - wt\%_{blank}) \times m_{conductive\ non-woven} \tag{S2}$$

The values are based on the percent by weight of the recess of the conductive non-woven of the original conductive non-woven (wt%$_{sample}$) and the percent by weight of the recess of a non-conductive non-woven of the original non-conductive non-woven (wt%$_{blank}$), which non-conductive non-woven is identical to the conductive non-woven except that is does not contain AgNW and which recesses were obtained by thermogravimetric analysis.

In the equatations $\rho_{Ag}$ is the density of silver (10.5 g/cm³), $V$ is volume, m is mass, r is the radius of the non-woven (2.75 cm) and $h$ is the thickness of the non-woven (approximately 53 μm). Determined weight percent of AgNW ranged from 1.8 to 77.15 wt%.

Electrical conductivities of the PAN/PCL/AgNW non-wovens were calculated according to following equations (S3) - (S5).

$$R_{sh} = 0.1526 \times 10^0\ \frac{\Omega \times 1000\ mm}{m} = 0.1526 \times 10^0\ \frac{\Omega\ m}{m} \tag{S3}$$

$$\rho = R_{sh} \times l \tag{S4}$$

$$\rho = 0.1526 \times 10^0\ \frac{\Omega \times 1000\ mm}{m} \times 0.056\ mm = 8.55\ \frac{\Omega\ mm^2}{m}$$

where $\rho$ is the resistivity, $R_{sh}$ is the sheet resistance, $l$ is the thickness of the non-woven, where $\sigma$ is the electrical conductivity. Resistivity measurements (Four point measurements) were performed using a Keithley 2420 High-Current Source Meter (Keithley Instruments GmbH, Landsberger Str. 65, 82110 Germering, Germany) coupled with a Signatone SYS-301 (Signatone Corporation, 393 Tomkins Ct# J, Gilroy, CA 95020, USA). The resistivity was measured ten times for each sample.

$$\sigma = \frac{1}{\rho} = \frac{1}{8.55\ \frac{\Omega\ mm^2}{m}} = 0.116959\ \frac{m}{\Omega\ mm^2} = 116959\ \frac{S}{m} \tag{S5}$$

When testing silver nanowires having an average length of 42.0 μm instead of an average length of 14.2 μm as the nanowires used for the non-wovens of above table 1, the inventors found that electrical conductivity was almost doubled for the same fraction of about 2.30 vol% AgNW in the non-woven fabric according to the invention.

6. Preparation of a sponge-like non-woven fabric:

A mixture of 50% by volume of dioxane and 50% by volume of water was prepared. A polyimide non-woven fabric obtained by electrospinning was cut into pieces, immersed in a part of the dioxane-water-mixture and frozen in liquid nitrogen. To the rest of the dioxane-water-mixture liquid nitrogen was added. The resulting mixture was homogenized in a homogenizer until a paste developed. Frozen pieces of the polyimide non-woven fabric were added to this paste and homogenized for 2 minutes under addition of a small amount of polyamide carboxylic acid dissolved in dimethyl sulfoxide (DMSO). The resulting dispersion was dried in a freeze dryer. Subsequently, it was slowly heated up to 300 °C and kept under this temperature for 1 hour under vacuum in a vacuum furnace. The resulting non-woven fabric had a sponge-like structure. It was cut into a piece of 1.4 cm x 1.6 cm x 2.0 cm by means of a razor blade.

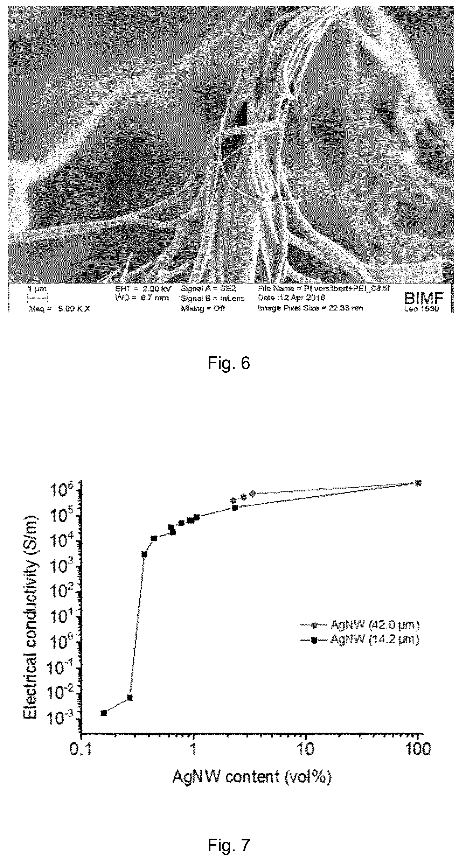

2 mL of a 200 mg/L polyethyleneimine (PEI) solution was diluted with 18 mL deionized water. The sponge-like fabric was immersed in the PEI solution and subsequently washed ten times with deionized water for removing excess PEI. Afterwards, the sponge-like fabric was immersed in the above described dispersion of silver nanowires on a shaker over night and subsequently washed with deionized water and dried at 70 °C. The content of silver by weight was about 50%. Fig. 6 shows an SEM image of the resulting sponge-like structure. The thin silver nanowires are clearly visible on thicker polyimide nanofibers.

7. Determination of electric conductivity of the conductive non-woven fabric membrane comprising PAN and PCL nanofibers and silver nanowires:

Different non-woven fabrics having a thickness of 50 $\mu$m to 60 $\mu$m were prepared with silver nanowires having arithmetic average lengths of 14.2 $\mu$m and 42.0 $\mu$m. The arithmetic average of the ratio of length to diameter of the silver nanowires having arithmetic average length of 14.2 $\mu$m was about 190. The silver content by volume of the different non-woven fabrics comprising these nanowires ranged from 0 to 2.3% by volume. The arithmetic average of the ratio of length to diameter of the silver nanowires having an average length of 42.0 $\mu$m was about 550 and the silver content by volume of the different non-woven fabrics comprising these nanowires ranged from 2.2 to 3.35 percent by volume. As can be seen from Fig. 7 a low content of silver did not result in a high electric conductivity of the membrane probably due to a low number of connections between the silver nanowires. Such a non-woven fabric can be used as an antistatic membrane. However, there is a drastic increase of the electrical conductivity at a silver content of between 0.27% to 0.36% by volume. An electric conductivity of up to 95000 S/m was reached. Such a conductivity is sufficient to supply typical electric consumers. Furthermore, Fig. 7 shows an increased conductivity for non-woven fabrics having identical content of AgNW but longer silver nanowires.

8. Determination of thermal conductivity of the conductive non-woven fabric membrane comprising PAN and PCL nanofibers and silver nanowires:

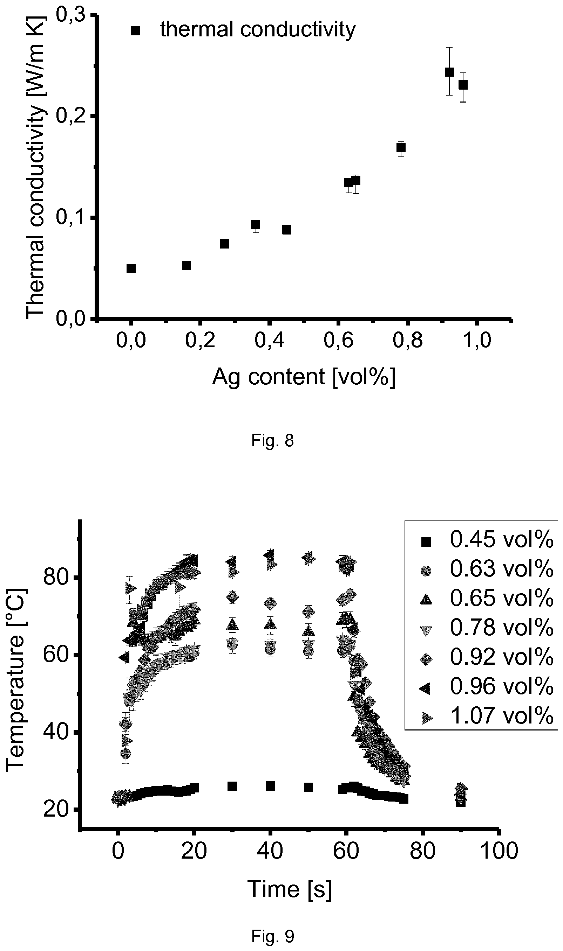

The non-wovens provided for the previous experiment were also used to determine thermal conductivity in dependency of the content of silver by volume. The result is shown in Fig. 8. This shows that the thermal conductivity increases with silver content. However, non-wovens having a silver content that allows good electrical conductivity still have a thermal conductivity of a usual non-woven fabric containing no silver.

Fig. 9 shows the temperature of non-woven fabrics having different contents of silver by volume when a current of 1.1 V is applied for 20 seconds such that electricity is conducted through the non-woven. Fig. 9 shows that the heating of the fabrics occurs very quickly and that cooling down also occurs very quickly after current has been switched off. Within 20 seconds the non-woven fabric with 1.07 vol% AgNW heats up to about 80 °C for 15 to 20 seconds and cools down immediately when the voltage is off.

9. Electric conductivity in dependency of compression:

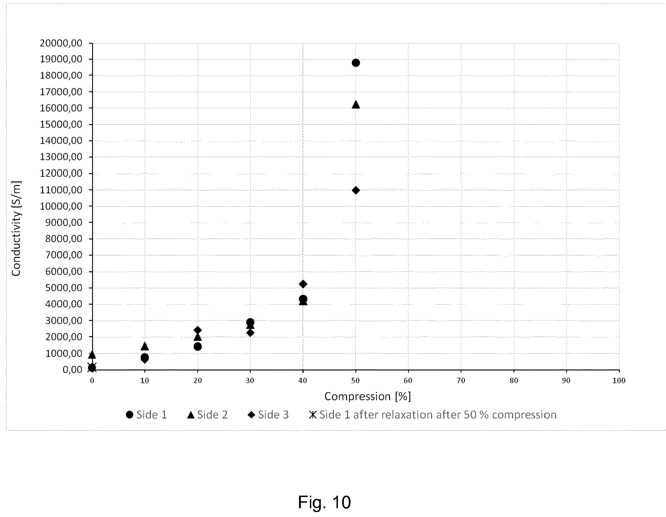

The sponge-like silver nanowires containing polyimide non-woven described above is cut to a block of 0.8 cm x 0.9 cm x 1.2 cm. It was used for examination of dependency of electric conductivity from compression. For measuring conductivity electrodes were positioned on opposite sides of the block. The result is shown in Fig. 10. A compression by 50% means that the length of one side is reduced to the half of its original length. Fig. 10 shows that a compression by about 50% results in a jump of conductivity. It also shows that a mechanical relaxation after the compression reduces conductivity to its original value.

When the non-woven is compressed such that electric conductivity is high the non-woven shows the typical heat emission when electricity is conducted through the non-woven. At the same time the non-woven shows a thermal conductivity that is typical for thermal insulators. A sponge-like non-woven can be used as a pressure sensor or for another electric element that shows conductivity in dependency of compression.

**Claims**

1. An electrically conductive non-woven fabric which fabric comprises or consists of a three-dimensional network of non-woven non-electrically conductive synthetic nanofibers and electrically conductive metal nanowires distributed therein, wherein the synthetic nanofibers comprise or consist of fibers having a diameter in the range of 10 nm to 2000 nm and a maximal length of 6 mm, wherein the electrically conductive metal nanowires comprise or consist of strands having a diameter in the range of 10 nm to 800 nm and a length in the range of 1 μm to 500 μm, wherein the electrically conductive metal nanowires occupy between 0.5% by volume to 5% by volume of said fabric, wherein the electrically conductive metal nanowires and the synthetic nanofibers are homogenously distributed within the electrically conductive non-woven fabric.

2. Electrically conductive non-woven fabric according to claim 1, wherein said synthetic nanofibers comprise or consist of fibers having a diameter in the range of 50 nm to 1350 nm, in particular in the range of 50 nm to 800 nm, and/or a length in the range of 0.5 mm to 0.15 mm.

3. Electrically conductive non-woven fabric according to claim 1 or 2, wherein said synthetic nanofibers comprise or consist of at least one of a polyimide, a polyamide, a polyester, polyacrylonitrile (PAN), a polyacrylonitrile comprising copolymer, polyethylene (PE), polyethylene terephthalate (PET), polypropylene (PP), polysulfone, poly(acrylonitrile/styrene/butadiene) copolymer (ABS), polycarbonate, polyamideimide, polyesterimide, polyurethane, polyguanidine, polybiguanidines, chitosan, silk, recombinant silk, collagene, cross-linked polyamide carboxylic acid, polyamide carboxylic acid, polyvinyl alcohol, polydiallyldimethylammonium chloride, polyvinylpyrrolidone, polystyrene (PS), polymethylmethacrylate (PMMA), a polycationic polymer, a polyanionic polymer, polycaprolactone, in particular poly(epsilon-caprolactone) (PCL), polylactic acid (PLA), poly-L-lactic acid (PLLA), and poly acrylic acid.

4. Electrically conductive non-woven fabric according claim 3, wherein said synthetic nanofibers comprise or consist of polyacrylonitrile and/or polycaprolactone, in particular poly(epsilon-caprolactone).

5. Electrically conductive non-woven fabric according to any of the preceding claims, wherein said electrically conductive metal nanowires comprise at least 80% by weight, in particular at least 90% by weight, of silver, copper, gold, nickel, iron, cobalt, rhodium, rhenium, iridium, osmium, bismuth, platinum and/or palladium.

6. Electrically conductive non-woven fabric according to any of the preceding claims, wherein said electrically conductive metal nanowires comprise or consist of strands having a ratio of length to diameter of at least 80, in particular a ratio of length to diameter in the range of 120 to 700, in particular a ratio of length to diameter in the range of 120 to 500.

7. Electrically conductive non-woven fabric according to any of the preceding claims, wherein said electrically conductive metal nanowires occupy a volume in the range of 0.3% by volume to 5% by volume, in particular in the range of 0.36% by volume to 3.5% by volume, in particular in the range of 0.5% by volume to 1.8% by volume, of said fabric.

8. Electrically conductive non-woven fabric according to any of the preceding claims, wherein said fabric has a density below 0.1 g/cm$^3$ or a density in the range of 0.15 g/cm$^3$ to 0.35 g/cm$^3$, a surface weight in the range of 8 g/m$^2$ to 20 g/m$^2$ and/or a porosity in the range of 70% to 99.5%.

9. Method for producing the electrically conductive non-woven fabric according to any of the preceding claims comprising or consisting of the following steps:

   a) Providing the non-electrically conductive synthetic nanofibers,
   b) providing the electrically conductive metal nanowires,
   c) homogenously dispersing the non-electrically conductive synthetic nanofibers and the electrically conductive metal nanowires in a liquid,
   d) separating the liquid from the dispersion resulting from step c).

10. Method for producing the electrically conductive non-woven fabric according to any of claims 1 to 8 comprising or consisting of the following steps:

   a) Providing a dispersion of the non-electrically conductive synthetic nanofibers in a liquid,
   b) separating the liquid from the dispersion thus resulting in a non-woven fabric of the synthetic nanofibers and optionally soaking the non-woven fabric with a hydrophilic liquid optionally followed by washing of the non-woven fabric,
   c) providing a dispersion of the electrically conductive metal nanowires,
   d) soaking the non-woven fabric of step b) with the dispersion of step c) optionally followed by washing of the non-woven fabric and
   e) drying of the non-woven fabric.

11. Method according to claim 9 or 10, wherein the liquid is removed by evaporation, soaking, suction, filtration and/or freeze drying.

12. Method according to any of claims 9 to 11, wherein the resulting non-woven fabric is heated to a temperature allowing the synthetic nanofibers to stick together, in particular to a temperature of up to 350 °C.

13. Method according to any of claims 9 to 12, wherein the liquid is a mixture of at least two of ethanol, isopropanol and water.

14. Method according to any of claims 9 to 13, wherein the non-electrically conductive synthetic nanofibers are produced by electrospinning and subsequent cutting or breaking of the resultant fibers.

15. Use of the electrically conductive non-woven fabric according to any of claims 1 to 8 for conducting electricity, for producing heat by conducting electricity through the non-woven fabric, for thermal insulation and/or for providing a pressure sensitive sensor, a filter, an electrode, a catalyst, a heating device, a biodegradable heating device, an electromagnetic shielding, a wrapping preventing electrostatic discharges, clothes preventing electrostatic discharges, or a membrane.

**Patentansprüche**

1. Elektrisch leitfähiger Vliesstoff, wobei der Stoff ein dreidimensionales Netzwerk aus nicht gewebten, nicht elektrisch leitfähigen synthetischen Nanofasern und darin verteilten elektrisch leitfähigen Metallnanodrähten umfasst oder daraus besteht, wobei die synthetischen Nanofasern Fasern mit einem Durchmesser im Bereich von 10 nm bis 2000 nm und einer maximalen Länge von 6 mm umfassen oder daraus bestehen, wobei die elektrisch leitfähigen Metallnanodrähte Stränge mit einem Durchmesser im Bereich von 10 nm bis 800 nm und einer Länge im Bereich von 1 μm bis 500 μm umfassen oder daraus bestehen, wobei die elektrisch leitfähigen Metallnanodrähte zwischen 0.5 Vol.-% bis 5 Vol.-% des genannten Stoffs einnehmen, wobei die elektrisch leitfähigen Metallnanodrähte und die synthetischen Nanofasern innerhalb des elektrisch leitfähigen Vliesstoffs homogen verteilt sind.

2. Elektrisch leitfähiger Vliesstoff nach Anspruch 1, wobei die synthetischen Nanofasern Fasern mit einem Durchmesser im Bereich von 50 nm bis 1350 nm, insbesondere im Bereich von 50 nm bis 800 nm, und/oder einer Länge im Bereich von 0,5 mm bis 0,15 mm umfassen oder daraus bestehen.

3. Elektrisch leitfähiger Vliesstoff nach Anspruch 1 oder 2, wobei die synthetischen Nanofasern mindestens eines der folgenden Materialien umfassen oder daraus bestehen: ein Polyimid, ein Polyamid, ein Polyester, Polyacrylnitril (PAN), ein Polyacrylnitril umfassend Copolymer, Polyethylen (PE), Polyethylenterephthalat (PET), Polypropylen (PP), Polysulfon, Poly(acrylnitril/styrol/butadien)-Copolymer (ABS), Polycarbonat, Polyamidimid, Polyesterimid, Polyurethan, Polyguanidin, Polybiguanidine, Chitosan, Seide, rekombinante Seide, Kollagen, vernetzte Polyamidcarbonsäure, Polyamidcarbonsäure, Polyvinylalkohol, Polydiallyldimethylammoniumchlorid, Polyvinylpyrrolidon, Polystyrol (PS), Polymethylmethacrylat (PMMA), ein polykationisches Polymer, ein polyanionisches Polymer, Polycaprolacton, insbesondere Poly(epsiloncaprolacton) (PCL), Polymilchsäure (PLA), Poly-L-Milchsäure (PLLA) und Polyacrylsäure.

4. Elektrisch leitfähiger Vliesstoff nach Anspruch 3, wobei die synthetischen Nanofasern Polyacrylnitril und/oder Polycaprolacton, insbesondere Poly(epsilon-Caprolacton), umfassen oder daraus bestehen.

5. Elektrisch leitfähiger Vliesstoff nach einem der vorstehenden Ansprüche, wobei die elektrisch leitfähigen Metallnanodrähte mindestens 80 Gew.-%, insbesondere mindestens 90 Gew.-%, Silber, Kupfer, Gold, Nickel, Eisen, Kobalt, Rhodium, Rhenium, Iridium, Osmium, Bismut, Platin und/oder Palladium umfassen.

6. Elektrisch leitfähiger Vliesstoff nach einem der vorstehenden Ansprüche, wobei die elektrisch leitfähigen Metallnanodrähte Stränge mit einem Verhältnis von Länge zu Durchmesser von mindestens 80, insbesondere einem Verhältnis von Länge zu Durchmesser im Bereich von 120 bis 700, insbesondere einem Verhältnis von Länge zu Durchmesser im Bereich von 120 bis 500, umfassen oder daraus bestehen.

7. Elektrisch leitfähiger Vliesstoff nach einem der vorstehenden Ansprüche, wobei die elektrisch leitfähigen Metallnanodrähte ein Volumen des Stoffs im Bereich von 0,3 Vol.-% bis 5 Vol.-%, insbesondere im Bereich von 0,36 Vol.-

% bis 3,5 Vol.-%, insbesondere im Bereich von 0,5 Vol.-% bis 1,8 Vol.-%, einnehmen.

8. Elektrisch leitfähiger Vliesstoff nach einem der vorstehenden Ansprüche, wobei der Stoff eine Dichte unter 0,1 g/cm$^3$ oder eine Dichte im Bereich von 0,15 g/cm$^3$ bis 0,35 g/cm$^3$, ein Oberflächengewicht im Bereich von 8 g/m$^2$ bis 20 g/m$^2$ und/oder eine Porosität im Bereich von 70% bis 99,5% aufweist.

9. Verfahren zur Herstellung des elektrisch leitfähigen Vliesstoffs nach einem der vorstehenden Ansprüche, umfassend oder bestehend aus den folgenden Schritten:

   a) Bereitstellen der nicht elektrisch leitfähigen synthetischen Nanofasern,
   b) Bereitstellen der elektrisch leitfähigen Metallnanodrähte,
   c) homogenes Dispergieren der nicht elektrisch leitfähigen synthetischen Nanofasern und der elektrisch leitfähigen Metallnanodrähte in einer Flüssigkeit,
   d) Absondern der Flüssigkeit von der aus Schritt c) resultierenden Dispersion.

10. Verfahren zur Herstellung des elektrisch leitfähigen Vliesstoffs nach einem der Ansprüche 1 bis 8, umfassend oder bestehend aus den folgenden Schritten:

   a) Bereitstellung einer Dispersion der nicht elektrisch leitfähigen synthetischen Nanofasern in einer Flüssigkeit,
   b) Absondern der Flüssigkeit von der Dispersion, wodurch ein Vliesstoff aus den synthetischen Nanofasern entsteht, und optional Tränken des Vliesstoffs mit einer hydrophilen Flüssigkeit, optional gefolgt von einem Waschen des Vliesstoffs,
   c) Bereitstellen einer Dispersion der elektrisch leitfähigen Metallnanodrähte,
   d) Tränken des Vliesstoffs aus Schritt b) mit der Dispersion aus Schritt c), optional gefolgt von einem Waschen des Vliesstoffs und
   e) Trocknen des Vliesstoffs.

11. Verfahren nach Anspruch 9 oder 10, wobei die Flüssigkeit durch Verdampfen, Aufsaugen, Absaugen, Filtrieren und/oder Gefriertrocknen entfernt wird.

12. Verfahren nach einem der Ansprüche 9 bis 11, wobei der resultierende Vliesstoff auf eine Temperatur erhitzt wird, die ein Zusammenkleben der synthetischen Nanofasern ermöglicht, insbesondere auf eine Temperatur von bis zu 350 °C.

13. Verfahren nach einem der Ansprüche 9 bis 12, wobei die Flüssigkeit eine Mischung aus mindestens zwei, ausgewählt aus Ethanol, Isopropanol und Wasser ist.

14. Verfahren nach einem der Ansprüche 9 bis 13, wobei die nicht elektrisch leitfähigen synthetischen Nanofasern durch Elektrospinnen und anschließendes Schneiden oder Brechen der resultierenden Fasern hergestellt werden.

15. Verwendung des elektrisch leitfähigen Vliesstoffs nach einem der Ansprüche 1 bis 8 zum Leiten von Elektrizität, zum Erzeugen von Wärme durch Leiten von Elektrizität durch den Vliesstoff, zur Wärmeisolierung und/oder zum Bereitstellen eines druckempfindlichen Sensors, eines Filters, einer Elektrode, eines Katalysators, einer Heizvorrichtung, einer biologisch abbaubaren Heizvorrichtung, einer elektromagnetischen Abschirmung, einer Umhüllung, die elektrostatische Entladungen verhindert, von Kleidung, die elektrostatische Entladungen verhindert, oder einer Membran.

**Revendications**

1. Tissu non tissé électriquement conducteur, lequel tissu comprend ou est constitué d'un réseau tridimensionnel de nanofibres synthétiques non tissées, non conductrices électriquement, et de nanofils métalliques électriquement conducteurs distribués en leur sein, dans lequel les nanofibres synthétiques comprennent ou sont constituées de fibres ayant un diamètre dans la plage de 10 nm à 2000 nm et une longueur maximale de 6 mm, dans lequel les nanofils métalliques électriquement conducteurs comprennent ou sont constitués de brins élémentaires ayant un diamètre dans la plage de 10 nm à 800 nm et une longueur dans la plage de 1 μm à 500 μm, dans lequel les nanofils métalliques électriquement conducteurs occupent entre 0,5 % en volume et 5 % en volume dudit tissu, dans lequel les nanofils métalliques électriquement conducteurs et les nanofibres synthétiques sont distribués de manière homogène au sein du tissu non tissé électriquement conducteur.

2. Tissu non tissé électriquement conducteur selon la revendication 1, dans lequel lesdites nanofibres synthétiques comprennent ou sont constituées de fibres ayant un diamètre dans la plage de 50 nm à 1350 nm, notamment dans la plage de 50 nm à 800 nm, et/ou une longueur dans la plage de 0,5 mm à 0,15 mm.

3. Tissu non tissé électriquement conducteur selon la revendication 1 ou 2, dans lequel lesdites nanofibres synthétiques comprennent ou sont constituées d'au moins un élément parmi un polyimide, un polyamide, un polyester, du polyacrylonitrile (PAN), un polyacrylonitrile comprenant un copolymère, du polyéthylène (PE), du polyéthylène téréphtalate (PET), du polypropylène (PP), du polysulfone, un copolymère de poly(acrylonitrile/styrène/butadiène) (ABS), du polycarbonate, du polyamideimide, du polyesterimide, du polyuréthane, de la polyguanidine, des polybiguanidines, du chitosane, de la soie, de la soie recombinée, du collagène, un acide carboxylique de polyamide réticulé, un acide carboxylique de polyamide, un alcool polyvinylique, du chlorure de polydiallyldiméthylammonium, de la polyvinylpyrrolidone, du polystyrène (PS), du polyméthacrylate de méthyle (PMMA), un polymère polycationique, un polymère polyanionique, de la polycaprolactone, notamment poly(epsilon-caprolactone) (PCL), de l'acide polylactique (PLA), de l'acide poly-L-lactique (PLLA) et de l'acide polyacrylique.

4. Tissu non tissé électriquement conducteur selon la revendication 3, dans lequel lesdites nanofibres synthétiques comprennent ou sont constituées de polyacrylonitrile et/ou polycaprolactone, notamment poly(epsilon-caprolactone).

5. Tissu non tissé électriquement conducteur selon l'une quelconque des revendications précédentes, dans lequel lesdits nanofils métalliques électriquement conducteurs comprennent au moins 80 % en poids, notamment au moins 90 % en poids, d'argent, cuivre, or, nickel, fer, cobalt, rhodium, rhénium, iridium, osmium, bismuth, platine et/ou palladium.

6. Tissu non tissé électriquement conducteur selon l'une quelconque des revendications précédentes, dans lequel lesdits nanofils métalliques électriquement conducteurs comprennent ou sont constitués de brins élémentaires ayant un rapport de longueur sur diamètre d'au moins 80, notamment un rapport de longueur sur diamètre dans la plage de 120 à 700, notamment un rapport de longueur sur diamètre dans la plage de 120 à 500.

7. Tissu non tissé électriquement conducteur selon l'une quelconque des revendications précédentes, dans lequel lesdits nanofils métalliques électriquement conducteurs occupent un volume dans la plage de 0,3 % en volume à 5 % en volume, notamment dans la plage de 0,36 % en volume à 3,5 % en volume, notamment dans la plage de 0,5 % en volume à 1,8 % en volume, dudit tissu.

8. Tissu non tissé électriquement conducteur selon l'une quelconque des revendications précédentes, dans lequel ledit tissu a une densité en dessous de 0,1 $g/cm^3$ ou une densité dans la plage de 0,15 $g/cm^3$ à 0,35 $g/cm^3$, un poids superficiel dans la plage de 8 $g/m^2$ à 20 $g/m^2$ et/ou une porosité dans la plage de 70 % à 99,5 %.

9. Procédé de production du tissu non tissé électriquement conducteur selon l'une quelconque des revendications précédentes, comprenant ou constitué des étapes suivantes :

   a) fournir les nanofibres synthétiques non conductrices électriquement,
   b) fournir les nanofils métalliques électriquement conducteurs,
   c) disperser de manière homogène les nanofibres synthétiques non conductrices électriquement et les nanofils métalliques électriquement conducteurs dans un liquide,
   d) séparer le liquide de la dispersion résultant de l'étape c) .

10. Procédé de production du tissu non tissé électriquement conducteur selon l'une quelconque des revendications 1 à 8, comprenant ou constitué des étapes suivantes :

   a) fournir une dispersion des nanofibres synthétiques non conductrices électriquement dans un liquide,
   b) séparer le liquide de la dispersion ainsi résultante dans un tissu non tissé des nanofibres synthétiques et imprégner en option le tissu non tissé d'un liquide hydrophile, suivi en option du lavage du tissu non tissé,
   c) fournir une dispersion des nanofils métalliques électriquement conducteurs,
   d) imprégner le tissu non tissé de l'étape b) de la dispersion de l'étape c), suivi en option du lavage du tissu non tissé, et

e) sécher le tissu non tissé.

**11.** Procédé selon la revendication 9 ou 10, dans lequel le liquide est éliminé par évaporation, absorption, aspiration, filtration et/ou lyophilisation.

**12.** Procédé selon l'une quelconque des revendications 9 à 11, dans lequel le tissu non tissé résultant est chauffé à une température permettant aux nanofibres synthétiques d'être collées, notamment à une température allant jusqu'à 350°C.

**13.** Procédé selon l'une quelconque des revendications 9 à 12, dans lequel le liquide est un mélange d'au moins deux éléments parmi l'éthanol, l'isopropanol et l'eau.

**14.** Procédé selon l'une quelconque des revendications 9 à 13, dans lequel les nanofibres synthétiques non conductrices électriquement sont produites par électrofilage et découpe ou cassure subséquente des fibres résultantes.

**15.** Utilisation du tissu non tissé électriquement conducteur selon l'une quelconque des revendications 1 à 8 pour la conduction d'électricité, pour la production de chaleur en conduisant de l'électricité à travers le tissu non tissé, pour l'isolation thermique et/ou pour la fourniture d'un capteur sensible à la pression, d'un filtre, d'une électrode, d'un catalyseur, d'un dispositif chauffant, d'un dispositif chauffant biodégradable, d'un blindage électromagnétique, d'un emballage empêchant des décharges électrostatiques, de vêtements empêchant des décharges électrostatiques ou d'une membrane.

Fig. 1

Fig. 2

Fig. 3

Fiber dispersion    AgNW dispersion

Fig. 4

5 µm

Fig. 5

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016128195 A

- US 7994080 B2

**Non-patent literature cited in the description**

- **WENG W. et al.** *Angew. Chem. Int. Ed.,* 2016, vol. 55, 6140-6169

- **S. M. BERGIN ; Y.-H. CHEN ; A. R. RATHMELL ; P. CHARBONNEAU ; Z.-Y. LI ; B. J. WILEY.** Nanoscale. 2012, vol. 4, 1996-2004